Europäisches Patentamt

(19) European Patent Office

Office européen des brevets

(11) Veröffentlichungsnummer: **0 085 339**
**B1**

(12) **EUROPÄISCHE PATENTSCHRIFT**

(45) Veröffentlichungstag der Patentschrift :
30.12.86

(51) Int. Cl.⁴: **H 01 B 3/44**, C 08 L 23/04,
C 08 K 3/32, C 08 K 5/52

(21) Anmeldenummer : 83100362.9

(22) Anmeldetag : 17.01.83

(54) Elektrische Isolierungen.

(30) Priorität : 29.01.82 DE 3202896

(43) Veröffentlichungstag der Anmeldung :
10.08.83 Patentblatt 83/32

(45) Bekanntmachung des Hinweises auf die Patenterteilung : 30.12.86 Patentblatt 86/52

(84) Benannte Vertragsstaaten :
AT BE CH DE FR GB IT LI NL SE

(56) Entgegenhaltungen :
DE-A- 2 934 601
US-A- 4 219 607
Die Akte enthält technische Angaben, die nach dem
Eingang der Anmeldung eingereicht wurden und die
nicht in dieser Patentschrift enthalten sind.

(73) Patentinhaber : Siemens Aktiengesellschaft Berlin
und München
Wittelsbacherplatz 2
D-8000 München 2 (DE)

(72) Erfinder : Henkel, Hans-Joachim, Dr.
Philip-Reis-Strasse 34
D-8520 Erlangen (DE)
Erfinder : Müller, Norbert, Dr.
Dompfaffstrasse 144
D-8520 Erlangen (DE)

**Beschreibung**

Die Erfindung betrifft elektrische Isolierungen, insbesondere bei Kabel und Leitungen, für Mittel- und Hochspannung ab ca. 10 kV, bestehend aus Polyolefinen und Zusätzen zur Verhinderung der Bildung von Wasserbäumchen.

In elektrisch beanspruchten Polyolefinisolierungen können Vorgänge ablaufen, die als « electrochemical treeing » (ECT) oder « water treeing » bezeichnet werden. Diese Vorgänge, die insbesondere im Hinblick auf die Betriebssicherheit kunststoffisolierter Mittel- und Hochspannungskabel von Bedeutung sind, führen zur Entstehung von bäumchenartigen Gebilden, den sogenannten ECT-Strukturen.

Das optische Erscheinungsbild von ECT-Strukturen, die nach geeigneter Anfärbung besonders kontrastreich und detailliert sichtbar sind, ist sehr vielfältig. Grundsätzlich unterscheidet man zwischen zwei Formen :

— « vented trees », die von der Oberfläche der Isolierung ausgehen und sich in die Isolierung hinein erstrecken, und

— « bow-tie trees », die im Inneren der Isolierung entstehen.

Der Mechanismus der ECT-Bildung ist bislang nicht geklärt. Allgemein wird aber angenommen, daß für die Bildung der ECT-Strukturen ein elektrisches Feld und die Amwesenheit von Wasser erforderlich ist ; die ECT-Strukturen werden deshalb auch als Wasserbäumchen bezeichnet. Die Initiierungsorte der Wasserbäumchen scheinen immer Störstellen zu sein, wie Verunreinigungen, aggregierte Beimischungen, Hohlräume, Spalte, Risse oder Grenzflächen, von denen jedoch jeweils nur ein Teil zur Bildung von Wasserbäumchen führt. Von den Störstellen aus, die bei im großtechnischen Maßstab hergestellten Isolierungen nicht vollständig vermieden werden können, erstrecken sich die bäumchenartigen Strukturen in Richtung des elektrischen Feldes.

Da ECT-Strukturen lokale Veränderungen des Isoliermaterials darstellen, können sie eine Schädigung der Isolierung bewirken, insbesondere im Hinblick auf die elektrische Durchschlagsfestigkeit. Es sind deshalb bereits zahlreiche Versuche unternommen worden, um das Wachstum von Wasserbäumchen zu verhindern oder zumindest zu verzögern.

Eine der Maßnahmen zur Verhinderung der Bildung von Wasserbäumchen besteht darin, die Isolierschicht mit einer metallischen Umhüllung bzw. Ummantelung, beispielsweise aus Blei oder Aluminium, zu versehen. Kabel mit einer derartigen Wasserabschirmschicht sind aber nicht nur kostspieliger, sondern auch schwerer und deshalb auch schwieriger handzuhaben als Kabel ohne eine Metallhülle.

Aus diesem Grunde ist deshalb bereits versucht worden, die Bildung von ECT-Strukturen durch die Zugabe von Additiven zur Isolierschicht (oder angrenzenden Schichten) zu unterbinden. Aus der Vielzahl der dabei eingesetzten Verbindungen seien beispielhaft genannt :

Bleistearat (DE-A-2 425 760 bzw. GB-A-1 473 867), Natriumchlorid und -sulfat oder andere starke Elektrolyte (DE-B-2 537 283 bzw. US-A-4 042 776), stabile Hydrate bildende Salze, wie Calcium- und Magnesiumchlorid, un basische Anhydride (DE-A-2 817 804 bzw. GB-A-1 584 501), Silicagel und Phosphorpentoxid (DE-A-2 754 336), Organosilane (US-A-4 144 202, US-A-4 212 756 und US-A-4 263 158 sowie DE-A-2 805 875), Bleioxide und basische Bleiverbindungen (DE-A-2 523 844 und DE-A-2 806 752), organische Isocyanate (US-A-4 282 333), auf das Polymermaterial aufgepfropfte Silanverbindungen (DE-A-2 935 224) und Metallkomplexe von Diketonen, Salicylsäure oder Schiffschen Basen (EP-A1-27 300).

Andererseits und konträr zu den Vorschlägen, salzartige Verbindungen bzw. Elektrolyte zuzusetzen, ist aber auch schon vorgeschlagen worden, den Gehalt der Isolierung an darin fein verteilten wasserlöslichen und/oder hygroskopischen Salzen unter einem Wert von $10^{-1}$ ppm und vorzugsweise unter $10^{-4}$ ppm zu halten (DE-A-2 911 756).

Offensichtlich haben aber all diese Maßnahmen, die sich darüber hinaus zum Teil auch widersprechen, noch nicht den erwünschten Erfolg gebracht. Denn so findet sich in einem Bericht über die Cigré, d. h. die Internationale Hochspannungskonferenz, von 1980 der Hinweis (siehe : « Kunststoffe » 71, 1981, Seite 448 ff), daß empfohlen wurde, bei (Hochspannungs-)Kabeln einen wasserdichten Metallschirm aufzubringen, um das Eindringen von Feuchtigkeit zu verhindern.

Aufgabe der Erfindung ist es, bei elektrischen Isolierungen der eingangs genannten Art die Bildung von Wasserbäumchen durch geeignete Zusätze wirksam und dauerhaft zu unterbinden, so daß auf aufwendige Maßnahmen, wie Metallmäntel, verzichtet werden kann.

Dies wird erfindungsgemäß dadurch erreicht, daß die Zusätze wasserlösliche Alkali- oder Erdalkaliphosphate und/oder hydrolysierbare Phosphorsäureester $(RO)_3PO$ sind, wobei wenigstens einer der Substituenten R ein aliphatischer Rest ist und die restlichen Substituenten R Wasserstoff oder ein aliphatischer Rest sein können.

In den erfindungsgemäßen elektrischen Isolierungen sind die Zusätze zur Verhinderung der Bildung von Wasserbäumchen also anorganische oder organische Phosphate. Die anorganischen Phosphate, die wasserlöslich sein müssen und in Form von Alkali- und/oder Erdalkalisalzen eingesetzt werden (keine Ammoniumsalze), stellen Derivate der Orthophosphorsäure oder der Pyrophosphorsäure dar ; dabei können sowohl primäre, sekundäre und tertiäre Orthophosphate als auch saure und neutrale Pyrophosphate verwendet werden. Beispielhaft seien folgende Verbindungen genannt : $NaH_2PO_4$, $Na_2HPO_4$ und

Na$_3$PO$_4$ sowie Na$_4$P$_2$O$_7$. Die anorganischen Phosphate werden vorzugsweise in wasserfreier Form eingesetzt, wobei auch kein Kristallwasser vorhanden sein soll.

Die organischen Phosphate sind hydrolysierbare Phosphorsäureester der Form (RO)$_3$PO, d. h. Ester der Orthophosphorsäure. Die Substituenten R bedeuten dabei Wasserstoff oder einen aliphatischen Rest, wobei aber wenigstens einer der Substituenten ein aliphatischer Rest sein muß. Die aliphatischen Reste stellen Alkylgruppen mit 1 bis 18 C-Atomen oder Alkenylgruppen mit 2 bis 18 C-Atomen dar. Beispielhaft sei als Phosphorsäureester Tri-n-butylphosphat (n-C$_4$H$_9$O)$_3$PO genannt.

Aus der US-A-4 219 607 sind elektrisch isolierende Zusammensetzungen bekannt, welche aus einem Polymeren, wie Polysiloxan, Epoxidharz oder Polyolefin, einem sogenannten « anti-tracking »-Additiv und einem Erosionsinhibitor bestehen. Bei dem genannten Additiv, das in den Zusammensetzungen in einem Anteil von bis zu 75 % vorhanden ist, handelt es sich dabei um Aluminiumoxid und Magnesiumoxid bzw. um die entsprechenden Hydrate, bei dem Erosionsinhibitor um spezielle organische Phosphorverbindungen. Die bekannten Zusammensetzungen finden beispielsweise bei Kabelverbindungen und Endverschlüssen Verwendung ; Berührungspunkte mit elektrischen Isolierungen, bei denen die Bildung von Wasserbäumchen verhindert werden soll, ergeben sich dabei aber nicht.

Außer in Kabel und Leitungen können die erfindungsgemäßen elektrischen Isolierungen auch in Muffen und in Garnituren Verwendung finden. Als Grundlage dienen bei diesen Isoliermaterialien Polyolefine, und zwar vernetzte oder unvernetzte Materialien. Insbesondere finden in den erfindungsgemäßen Isolierungen Polyethylen (PE) und vernetztes Polyethylen (VPE) Verwendung. Daneben können aber auch Ethylen-Copolymere, wie Ethylen-Propylen-Copolymere (EPR), Ethylen-Vinylacetat-Copolymere (EVA) und Ethylen-Alkylacrylat-Copolymere (beispielsweise Ethylen-Ethylacrylat- und -Butylacrylat-Copolymere), bzw. Ethylen-Propylen-Dien-Terpolymere und Gemische (Blends) dieser Ethylen-Copolymere und -Terpolymere mit Polyolefinen, insbesondere Polyethylen und Polypropylen, eingesetzt werden. Die genannten Polymeren bzw. Polymergemische können, wie bereits erwähnt, sowohl vernetzt als auch unvernetzt zum Einsatz kommen. Die Vernetzung kann dabei peroxidisch oder durch energiereiche Strahlen erfolgen.

Der Anteil der Zusätze beträgt vorzugsweise zwischen 0,1 und 10 Gew.-%, bezogen auf das Gesamtgewicht der elektrischen Isolierung. Bei Kabel und Leitungen können die Phosphorverbindungen der eigentlichen Isolierschicht als auch den feldbegrenzenden Schichten, d. h. der inneren und äußeren Leitschicht, zugesetzt werden. Im einzelnen gilt dabei folgendes : Bei anorganischen Phosphaten beträgt der Anteil in der Isolierschicht etwa zwischen 1 und 5 Gew.-% und in der Leitschicht etwa zwischen 1 und 10 Gew.-% ; bei organischen Phosphaten beträgt der Anteil etwa zwischen 0,1 und 5 Gew.-%, vorzugsweise etwa zwischen 0,5 und 1 Gew.-%, wobei der Zusatz der Isollier- und/oder der Leitschicht zugegeben wird.

Anhand von Ausführungsbeispielen soll die Erfindung noch näher erläutert werden.

Zum Nachweis der Verminderung der Bildung von Wasserbäumchen wurden aus einem hochreinen, unstabilisierten thermoplastischen Polyethylen niederer Dichte (LDPE) 3 mm dicke Platten — mit und ohne Zusatz — hergestellt. Zur Herstellung von erfindungsgemäßen Isolierungen wurden dabei in einen Teil des Plattenmaterials vor dem Verpressen Natriumphosphate in verschiedenen Konzentrationen eingemischt. Die plattenförmigen Prüflinge wurden dann mit 10 kV/50 Hz elektrisch belastet, wobei sich beide Oberflächen in direktem Kontakt mit einer auf 70 °C erwärmten 3 %igen Natriumchloridlösung befanden. Die Belastungsdauer betrug 130 Stunden.

Die Versuchsergebnisse zeigen, daß die phosphathaltigen Plattenprüflinge — unter gleichen Versuchsbedingungen — im Vergleich zu den Prüflingen ohne Phosphatzusatz sehr wenig ECT-Strukturen enthalten. Es ergibt sich ferner auch ein beachtlicher Unterschied in der Größe der ECT-Strukturen. Während nämlich die Längenausdehnung der ECT-Strukturen in Richtung des elektrischen Feldes in den Prüflingen ohne Phosphatzusatz bis zu 1 500 µm beträgt, weisen die phosphathaltigen Prüflinge zum Teil ECT-Strukturen unterhalb 50 µm auf.

Im einzelnen ergibt sich — bei Zusätzen von etwa 1 % — beispielsweise folgendes :

| Zusatz | Länge der ECT-Strukturen | relative Anzahl der ECT-Strukturen (bezogen auf Vergleichsversuch) |
|---|---|---|
| - (Vergleichsversuch) | 1500 µm | - |
| Na$_3$PO$_4$ | < 50 µm | geringer |
| Na$_2$HPO$_4$ | < 50 µm | geringer |
| NaH$_2$PO$_4$ | 100 µm | geringer |
| Na$_4$P$_2$O$_7$ | < 50 µm | gleich |

Es zeigt sich somit, daß die ECT-Bildung bereits bei geringen Phosphat-Konzentrationen beträchtlich reduziert werden kann. Dies hat den weiteren Vorteil, daß die elektrischen Eigenschaften der Isolierung nicht oder nur unwesentlich beeinflußt werden.

## Patentansprüche

1. Elektrische Isolierungen, insbesondere bei Kabel und Leitungen, für Mittel- und Hochspannung ab ca. 10 kV, bestehend aus Polyolefinen und Zusätzen zur Verhinderung der Bildung von Wasserbäumchen, dadurch gekennzeichnet, daß die Zusätze wasserlösliche Alkali- oder Erdalkaliphosphate und/oder hydrolysierbare Phosphorsäureester $(RO)_3PO$ sind, wobei wenigstens einer der Substituenten R ein aliphatischer Rest ist und die restlichen Substituenten R Wasserstoff oder ein aliphatischer Rest sein können.

2. Elektrische Isolierungen nach Anspruch 1, dadurch gekennzeichnet, daß der Anteil der Zusätze zwischen 0,1 und 10 Gew.-% liegt, bezogen auf das Gesamtgewicht.

3. Elektrische Isolierungen nach Anspruch 1 oder 2, dadurch gekennzeichnet, daß die Phosphate in wasserfreier Form vorliegen.

## Claims

1. Electrical insulations, more particularly for cables and wiring, for medium and high voltages from approximately 10 kV, consisting of polyolefines and additives to prevent the formation of water trees, characterised in that the additives are water-soluble alkaline or alkaline earth phosphates and/or hydrolyzable phosphoric esters $(RO)_3PO$ and at least one of the substitutes R is an aliphatic radical and the remaining substitues R can be hydrogen or an aliphatic radical.

2. Electrical insulations according to claim 1, characterised in that the proportion of additives is between 0.1 and 10 % by weight, relative to the total weight.

3. Electrical insulations according to claim 1 or 2, characterised in that the phosphates are present in water-free form.

## Revendications

1. Isolants électriques, notamment pour des câbles et des conducteurs en moyenne tension et en haute tension à partir de 10 kV environ, constitués de polyoléfines et d'additifs pour empêcher la formation d'arborescences d'eau, caractérisés en ce que les additifs sont des phosphates, solubles dans l'eau, de métaux alcalins ou de métaux alcalino-terreux et/ou des esters hydrolysables de l'acide phosphorique $(RO)_3PO$, l'un au moins des substituants R étant un radical aliphatique et les substituants R restants pouvant être de l'hydrogène ou un radical aliphatique.

2. Isolants électriques suivant la revendication 1, caractérisés en ce que les additifs représentent de 0,1 à 10 % du poids total.

3. Isolants électriques suivant la revendication 1 ou 2, caractérisés en ce que les phosphates sont sous forme anhydre.